# EUROPEAN PATENT SPECIFICATION

(11) **EP 0 959 686 B1**
(45) Date of publication and mention of the grant of the patent: **01.10.2003**
(21) Application number: 97936888.3
(22) Date of filing: 01.08.1997
(51) Int. Cl.: A22C 25/16

(54) **METHOD AND MACHINE FOR REMOVING PIN BONES FROM FISH FILLET**
VERFAHREN UND VORRICHTUNG ZUM ENTFERNEN DER GRÄTEN VON FISCHFILETS
PROCEDE ET MACHINE POUR ENLEVER LES ARETES D'UN FILET DE POISSON

(30) Priority: 05.08.1996 NO 963264
(43) Date of publication of application: 01.12.1999
(73) Proprietor: TRIO INDUSTRIER AS, 4033 Forus (NO)
(72) Inventor: EIDE, Ragnar, N-4026 Stavanger (NO)
(74) Representative: Lucas, Brian Ronald
(86) International application number: NO9700196
(87) International publication number: WO98005215

(56) References cited:
- WO-A-96/16554
- DE-A- 2 641 427
- NO-B- 163 351
- SE-C- 500 531
- US-A- 3 570 048

## Description

The present invention relates to a method and a machine for the removal of pin bones from fish fillet, in particular fillet of salmon. The removal of pin bones may be carried out as an independent operation in a separate machine, but is preferably implemented in a machine arranged to carry out a subsequent skinning of the fillet. A known skinning machine may then be modified by the provision of a tool, arranged to remove said pin bones after the removal of dorsal spine and ribs in preceding operations. However, there is in principle nothing preventing removal of the pin bones independently of a subsequent skinning, i.e. from fillets which have already been skinned prior to the removal of pin bones. However, removal of pin bones followed by skinning in one and same machine is the preferred but non-limiting embodiment of the invention, in which the two fish processing operations take place without any intermediate reorientation or other handling of the fillet, which is thus positioned in an initial loading operation for the safe fixation during the following operation of removing pin bones. This positional fixation is then utilized without changes for the skinning operation.

When, during the filleting of fish, cuts are made along the dorsal spine and ribs as these bones are cut away, the so-called pin bones, which, in a cross-section through a fish, extend essentially perpendicularly from the dorsal spine and otherwise point backwards towards the tail, are not removed along with the former bones. After the dorsal spine and the ribs have been cut away in the filleting, the pin bones are no longer really anchored to the fillet, except through adhesion to the surrounding flesh of the fish. Pin bones may thus be pulled out/plucked from the fish flesh, for example by means of manually operated tweezer-like tongs. A plate element with slot-like holes tapering towards one end, might in principle also be used, the plate element being passed across the fillet, with the slots in the direction in which the pin bones follow one behind the other in the longitudinal direction of the fillet, with the tapering end portion of the slots, so as to bring the projecting end portion of the pin bones into the slots, and lock them at the tapered ends of the slots for subsequent jerking out of the fillet. After being plucked, the pin bones must be removed from the tool, which may possibly have been used for their removal.

The majority of the species of fish being caught and used in Norway, contain pin bones. Herring has several pin bones, so thin that they are mostly ignored. The pin bones of cod are cut away in special cod filleting machines. In the machine a V-shaped cut is made from the neck area to about half-way along the fillet, which is divided thereby, which is not desirable for other species of fish.

Thus, for salmon, trout and char whole fillet is desirable, and conventional pin bone removal has mainly consisted in plucking by means of tongs. This is relatively time-consuming work, and experience shows that it tends to result in wrist injuries because of the strain.

Attempts have been made to develop machines and/or tools which might facilitate the work of removing pin bones. Only tools which themselves are rotationally driven, but are otherwise manual, have been provided, which tools are passed by hand with their rotational fishbone-jerking tool across the fillet. Known tools of this kind comprise a rotating drum whose circumferential surface is formed with notches whose edges form "hangers" for the fixed hitching of projecting end portions of the pin bones and the plucking of these in the continued rotation of the tool.

A known tool of this kind is disclosed in Swedish patent publication No. 500 531. The tool is constructed on a rotationally driven drum, whose circumferential surface is configured with a number of elongated notches oriented with their longitudinal direction in the circumferential direction of the drum, and having a wide leading end leading in the rotational direction of the drum, and a tapering trailing end. These notches form grippers for the projecting ends of ribs while the tool is passed across a supported, but not intentionally fixed fish fillet. The axis of the handle is coincident with the axis of rotation the drum.

This known tool is heavy in handling, and the result of the plucking is usually somewhat poorer in terms of both quality and quantity than manual pinbone-yanking by means of tongs.

These unsatisfactory results of fishbone removal with this known tool according to SE 500 531 may be connected to the following conditions: (i) The manual operation, which involves uneven passing of the tool when applied; (ii) the poorly protruding positions of the projecting end portions of the fishbones; and (iii) the fish fillet not being completely fixed during the plucking of the bones. It should therefore, at least in principle, be possible for the rotatably driven drum with the notches formed in the circumferential surface and having the above mentioned elongated, tapering form and orientation in relation to the direction of rotation of the drum, to be used with a more favourable function in terms of quality and quantity, if used in a machine, in which said unfavourable conditions (i) - (iii) had been eliminated or improved to a considerable extent.

The general purpose of the invention was to provide a rational method and an efficient machine for removing pin bones by means of for example a modified fishbone-plucking tool known in itself (cfr. SE 500 531), by which the fish fillet is not of poorer quality after the treatment, and in which the processing of the fillets takes place while they are firmly fixed; and in which the removal of the pin bones is preferably followed by a skinning operation, in which the orientation of the initial position and the firm fixation of the fillet is utilized once again.

The purpose is realized according to the present invention respectively by a method in accordance with the characterizing part of claim 1 and by means of a machine for removing pin bones from fish fillet, having the characteristics that appear from the characterizing part of the following claims.

For several years it has been known for skinning machines for fish fillets to use a cooled, rotating drum - a so-called freezing drum - for the fixation of the fillet during the skinning operation which has usually been implemented by means of a band cutter, whose cutting edge may be adjustable in relation to adjacent portions of the circumferential surface of the drum passing in rotation. Fillet is fed into the skinning machine in such a way that the skin side of the fillet freezes to the circumferential surface of the rotating cold drum. The fillet is then fixedly held in position on the cold drum, by the water on the surface chrystallizing, thus freezing the fillet thereto. The freezing is concentrated to the surface of the skin. The skinning itself is done by a rotating band cutter separating the fillet from the skin, whereafter the skin remains stuck to the surface of the drum until one or more scraping means, which are movable towards the circumferential surface of the drum and away from it, are brought into working position and thus scrape skin and any frozen up pieces of fish flesh off the drum during the continued rotation of the latter. WO-A-96/16554 shows such a machine, the pertinent features of which are set out in the pre-characterising portion of claim 1.

The present invention is based on the idea of detecting and removing pin bones from fillet, which is fixedly frozen to and positioned on a rotatable freezing drum. In far most cases the fillets are to be skinned after the removal of the pin bones. Thereby different operations are combined and the handling of the fish fillets is reduced.

The fillets being fixedly frozen to a rotating drum meets one of the requirements for making use of a pin bone plucking tool of the principal type disclosed in SE 500 531. The fish fillets bearing on the arcuate circumferential surface of the rotating freezing drum, causes the free side of fish flesh with the hardly projecting end portion of the pin bones to bend, and the bones stand out stiffly, so that they are more easily brought into a fixing engagement with, for example, tapering hole circumferences defining notches/recesses in the circumferential drum portion of the fishbone-jerking tool. The not manually supported, accurately positioning of such a tool or a similar tool in relation to the fixed fillet, which is lead past the tool along an unchangeable circular arc, will provide a more successful plucking, in terms of both quantity and quality. As concerns the factors (i) - (iii), there has, according to the invention, been made an improvement to all of them.

By the tool according to the above SE 500 531 the notches in the circumferential surface portion of the driven, rotatable drum have the form of an elongated narrow groove provided by milling, and in the one end of which a recess has been milled, so as to form a funnel which is of importance to the ability of the tool to catch fish bones projecting from the fish flesh. Since the pin bone end portions projecting from the fillet side, do not all point in the same direction, the driven, rotatable drum of the tool should have a catching or guiding means guiding the pin bones into said holes/notches. By the tool according to SE 500 531 said funnel-shaped recess constitutes exactly such a catching or guiding means when the tool is passed across a supported, not fixed fillet. These notches, formed in the circumferential surface portion of the drum, may with advantage be located flush with each other, both in the circumferential direction of the driven, rotatable tool drum and transversely to the circumferential surface. The funnel-shaped guiding means should according to said SE patent document have such form that their edge lines are mainly tangent to each other.

Respectively by a method and in a machine according to the invention, any pin-bone-plucking tool may in principle be used in combination with a freezing drum, provided that it is suitable for processing a fillet, which bears, through freezing, against a curved circumferential surface of a rotating drum.

In a machine according to the invention it is an obvious advantage if it is equipped with a detector arranged to detect whether all pin bones have been pulled out or not, before the treated fish fillet has left the machine. Fillet, which after treatment still contains stuck pin bones, shall be separated from the pinbone-less fillets and perhaps be subjected to a manual pin-bone-plucking operation.

The method and machine for the removal of pin bones in accordance with the present invention will be explained in detail in the following in connection with a non-limiting example of a possible embodiment, which is illustrated in the accompanying drawings, in which
Fig. 1 shows a cross-section through an eviscerated salmon;
Fig. 2 shows a fillet after the dorsal spine and the ribs have been cut away, but with remaining pin bones which are now anchored to the fillet only through the mutual adhesion of bones and tissue;
Fig. 3 shows a fillet frozen to a freezing drum and under the influence of a plucking tool for the pin bones, seen from above;
Fig. 4 shows, on a larger scale, a cross-section along the line IV-IV in Fig. 3;
Fig. 5 shows a schematic side view of a machine configured according to the invention.

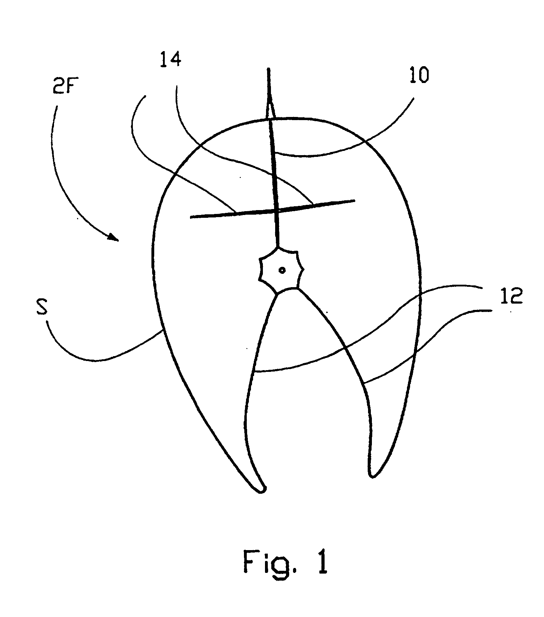

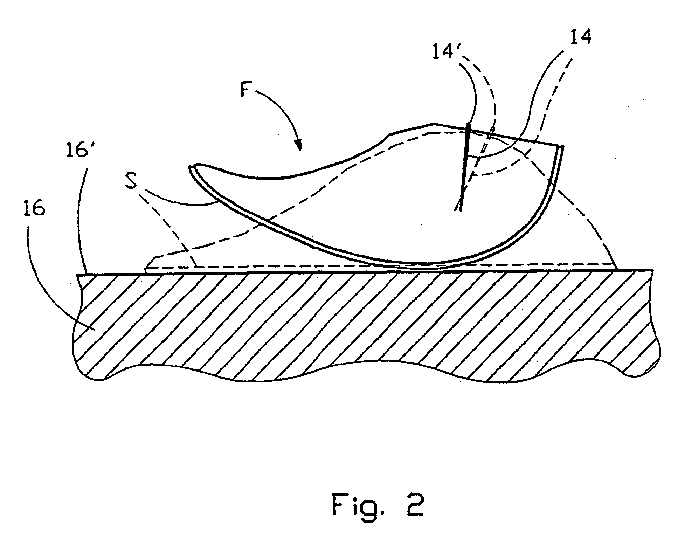

Reference is first made to Figs. 1 and 2 which respectively show cross-sections through an eviscerated fish 2F and a fillet F originating from the former and from which dorsal spine 10 and ribs 12 have been cut away, while pin bones 14 are still left.

The fish skin is designated S.

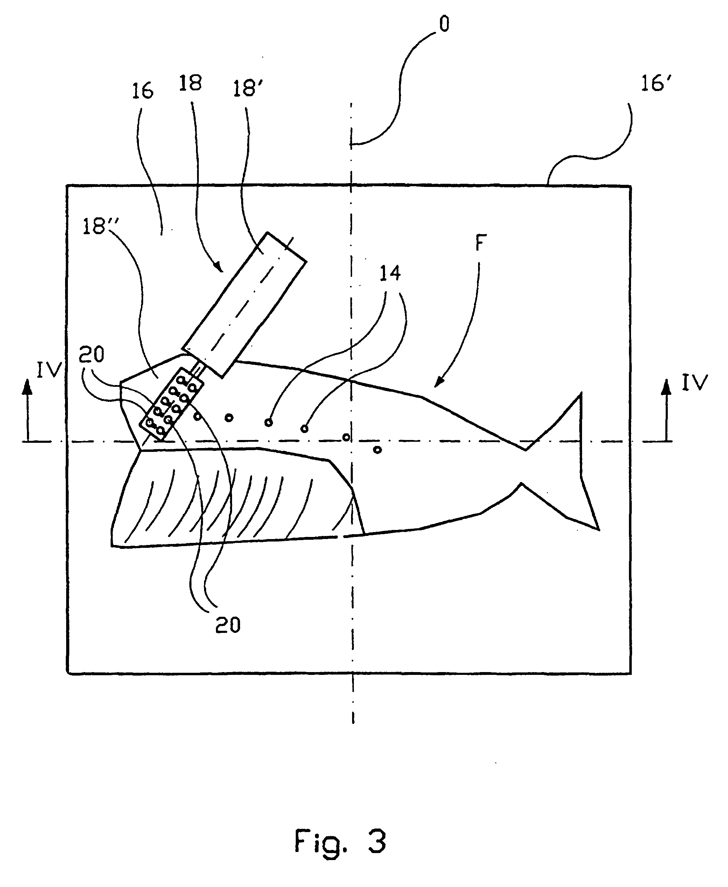

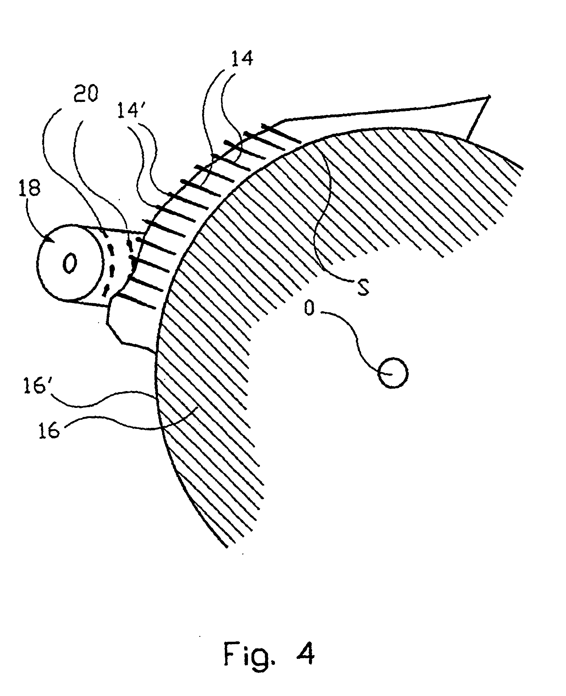

The essence of the invention is illustrated in Figs. 3 and 4 in which the reference numeral 16 indicates a freezing drum known in itself, whose circumferential surface the wet skin S of a fish fillet F is brought into contact with for the freezing and fixation thereto, as appears from Figs. 3 and 4, from which the orientation of the fillet F clearly appears. In Fig. 2 is indicated in dotted line approximately what the cross-section of the fillet F will look like, when the skin has frozen to a circumferential surface 16' of the freezing drum 16. The axis of rotation of the freezing drum 16 is designated 0.

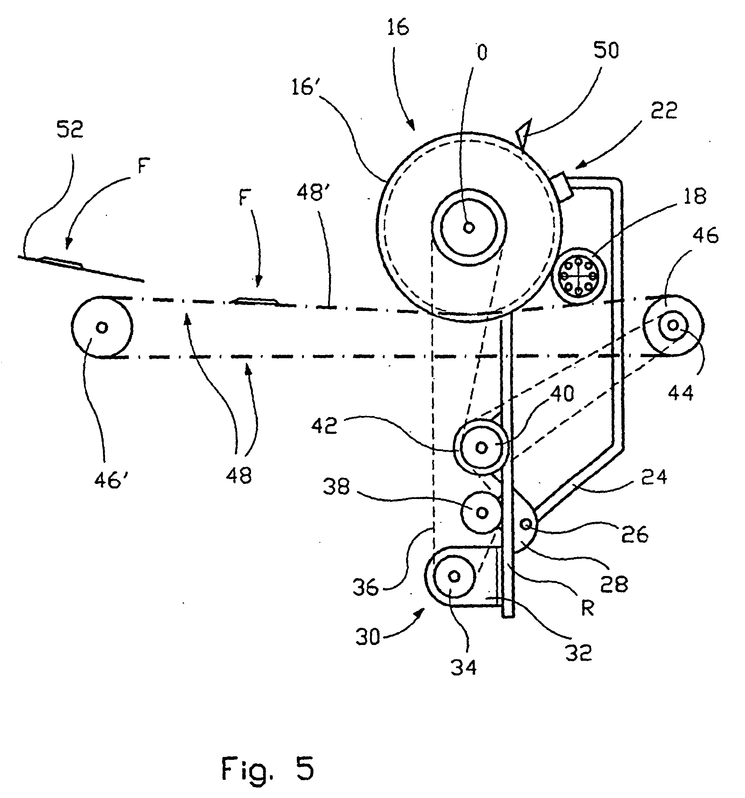

A driven rotatable pin-bone-plucking tool 18, for example of the kind disclosed in SE patent No. 500 531, or of a similar kind, whose mounting part 18' is mounted on a skinning machine, Fig. 5, preferably with adjustment possibilities for its active pin bone-plucking part in the form of a small, driven, rotatable cylindrical drum 18" which along its circumferential surface has holes, notches or recesses 20 formed therein and with delimiting edges, holes and edges of holes forming plucking means for end portions 14' of projecting pin bones 14. Such a pin bone-plucking means must have two opposite hole/notch/recess-defining, converging material edges, which between themselves catch the projecting end portion 14' of a pin bone during the rotation of the plucking drum 18". Fig. 5 shows, in a greatly simplified side view, the main components comprised by a machine for plucking pin bones, preferably with subsequent skinning, from which, among other things, the machine frame has been left out and is represented only by a line R.

Apart from the arrangement of the pin bone-plucking device 18 near the freezing drum 16, for plucking pin bones 14 from a fillet F while the latter is frozen to the circumferential surface 16' of the freezing drum 16, the longitudinal direction of the fillet F being preferably perpendicular to the axis of rotation 0 of the freezing drum 16, the shown fish processing machine is essentially configured as a skinning machine, and in the preferred embodiment of the present invention the machine will comprise a skinning knife well known in itself, preferably in the form of a rotating band cutter 22, which may be placed somewhat above the pin bone-plucking device 18 according to the invention. The band cutter 22 is mounted on a pivotal arm 24 having a pivot point 26 formed by a pivot between a pair of lugs 28 on the machine frame R.

On an outgoing axle and concentric therewith, a driving motor 30 mounted on a bracket 32 on the machine frame R, is provided with a first chain wheel 34, which by way of a chain 36 driven the freezing drum 16. The chain 36 is placed over a guiding, second chain wheel 38, and from there along a circular arc portion of the circumference of a third chain wheel 40, having a coaxial, fourth chain wheel 42. The driven fourth chain wheel 42 again drives a fifth chain wheel 44 driving one, driven guide roller or similar 46 for an endless fillet conveyor 48 of well known type, and whose second guide roller is designated 46'.

In the area of the lower portion of the freezing drum 16 immediately above an upper portion 48' of the conveyor 48 passing there below, the upper portion 48' of the conveyor 48 may have a deflected portion (indicated in Fig. 5), well known in itself, to ensure that the skin side S of the fillet is subjected to a resilient pressing against the circumferential surface 16' of the drum 16 as the fillet skin is brought to bear against and freeze to said circumferential surface. This represents a technology well known in itself.

The reference numeral 50 indicates a skin scraper known in itself, and arranged to be displaceable between an active scraping position with its scraping edge almost bearing against the circumferential surface of the drum 16, and an idle and stand-by position in which the scraper 50 is withdrawn and out of the way during the passing of the freezing drum 16 with the fillet F.

The reference numeral 52 designates a supply chute for fillets F.

The fillet F is fed into the machine, so that the pin bones 14 come to lie on a defined line on the feeding conveyor 48, see Fig. 3.

The actual plucking means 20 of the pin bone-plucking device 18, having the form of notches or similar, are positioned in such a manner that they are on said defined line.

Apart from the rotational natural movement of the plucking drum 18", the pin bone-plucking device is mounted stationary to the machine frame R, preferably adjustable, for example pivotally/displaceably. Adjustment devices for this purpose, either gradual or indefinitely variable, are known in a wide variety of embodiments and are in themselves not part of the present invention.

The main principle for plucking the pin bones 14 consist in the plucking device 18 sweeping the fillet F as it passes in rotation, whereby the actual plucking means grip and pull the pin bones 14 out in approximately the same direction as the one adopted by the bones 14 in the fillet F.

The plucking device may have a completely different constructional configuration than the mainly described form. It is thus conceivable that the shown plucking device is replaced by a similar device which is based on the use of tweezer-like, movable tongs (not shown), located on the same place as the plucking means 20 of the plucking device 18, Fig. 3.

A not shown detector, sensor, etc. is provided, which monitors and detects if there are still bones in the fillet F. If the detector/sensor detects remaining pin bones, the bone-containing fillet is brought out on a separate conveyor (not shown) for subsequent manual checking and removal of pin bones.

The fillet F from which pin bones have been removed, is then usually subjected to skinning in a manner known in itself, by the frozen up fillet, free of pin bones, passing through the working/cutting area of said band cutter 22 or other skinning knife.

## Claims

1. Method for the removal of pin bones (14) from fish fillets (F), from which dorsal spine and preferably also ribs (10, 12) have already been removed in a preceding fish processing operation, which method comprises the steps of freezing a skin side or a skinned flesh side of a fillet (F) to a circumferential surface (16') of a rotating freezing drum (16) so that the fillet (F) is fixedly supported thereon, **characterized by** the step of plucking pin bones (14) out of the fillet (F) from a stationary position near the circumferential surface (16') of the rotating freezing drum (16) by means of a pin bone-plucking device (18) having moving, for example rotating, plucking means, in the form of notches (20) for example, that work in contact with or in the immediate vicinity of the outwards facing side surface of the rotating fillet (F).

2. Method according to claim 1, **characterized in that** the plucking device (18), which is provided with a cylindrical, rotatably operated drum (18'') in the circumferential layer of which said plucking means (20) are formed, is forcedly rotated in the same direction as the freezing drum (16), during which its circumferential surface with the plucking holes/notches (20) formed therein, are brought to sweep said outwards facing side surface of the fillet (F) during the plucking of pin bones.

3. Method according to claim 1 or 2, **characterized in that**, after the removal of the pin bones, the fillets (F) are subjected to skinning by means of a skinning knife (22) known in itself, while they are held in their initial position, frozen to the circumferential surface (16') of the freezing drum (16).

4. Method according to one or more of the preceding claims, **characterized in that** the fillets (F) on being fed into a machine provided with a rotatably driven freezing drum (16) and a pin bone-plucking device (18), are oriented in such a manner in relation to the axis of rotation (0) of the freezing drum (16), that the longitudinal direction of the fillets (F) will extend substantially in the circumferential direction/direction of rotation of the freezing drum (16).

5. Machine for the removal of pin bones from fish fillet (F), from which dorsal spine and preferably also ribs have been removed in a preceding fish processing operation, comprising a rotatably driven freezing drum (16), to the circumferential surface (16') of which the skin side (S) or the skinned side of the fillets (F) is to be frozen, and in which the fillet (F) is thus fixedly held and thus joins in the rotation of the freezing drum (16) in subsequent processing operation(s), **characterized in that** the machine comprises a pin bone-plucking device (18), mounted in the vicinity of the circumference (16') of the freezing drum and preferably on the machine frame (R).

6. Machine according to claim 5, **characterized in that** the pin bone-plucking device (18) comprises a mounting part (18') which is stationary, but possibly adjustably mounted on the machine frame (R), and which forms a rotatable support for a drum-shaped working head (18") in the circumferential surface layer of which are formed notch-like or recess-like pin bone-plucking means (20), which are elongated in the direction of rotation of the working head (18") and preferably are formed with a relatively wide leading end for the reception of the end portion of a pin bone, the wide leading end tapering towards the trailing end, in which the pin bone will be stuck and subsequently yanked out in the joint rotation of the drum-shaped working head (18") and the freezing drum (16).

7. Machine according to claim 5 or 6, **characterized in that** a vertical plane through the axis of rotation of the rotatably driven drum-shaped working head (18") of the pin bone-plucking device (18) forms an acute angle to a vertical plan through the axis of rotation (o) of the freezing drum (16).

8. Machine according to one or more of the claims 5 to 7, **characterized in that** the rotatably driven, drum-like working head (18") of the pin bone-plucking device (18) is arranged to be driven in the same direction of rotation (0) as the freezing drum (16).

9. Machine according to any of the claims 5 to 8, **characterized by** an inlet chute (52) above the upper, essentially horizontal part (48') of a driven, endless conveyor (48) extending immediately below the lower portion of the freezing drum (16), which feeding assembly (52, 48) is arranged to feed fillets (F) with their longitudinal direction essentially coincident with the circumferential direction of the freezing drum (16).

10. Machine according to any of the claims 5 to 9, **characterized in that** the machine is equipped with at least one sensor arranged to detect whether there are still bones in the fillet (F) after the pin bone-plucking.

## Patentansprüche

1. Verfahren zum Entfernen von Stiftgräten (14) aus Fischfilets (F), aus welchen in einem vorangegangenen Fischbearbeitungsvorgang bereits Rückgrat und bevorzugt auch Rippen (10, 12) entfernt wurden, wobei das Verfahren die Schritte des Anfrierens einer Hautseite oder einer gehäuteten Fleischseite eines Filets (F) auf eine Umfangsoberfläche (16') einer sich drehenden Gefriertrommel (16) umfasst, so dass das Filet (F) darauf fest gehalten wird, **gekennzeichnet durch** den Schritt des Auszupfens von Stiftgräten (14) aus dem Filet (F) bei einer feststehenden Position nahe der Umfangsoberfläche (16') der sich drehenden Gefriertrommel (16) mittels einer Stiftgräten-Zupfvorrichtung (18), welche sich bewegende, beispielsweise sich drehende Zupfeinrichtungen, beispielsweise in der Form von Kerben (20), aufweist, welche **durch** Kontakt mit oder in der unmittelbaren Nähe der nach aussen zeigenden Seitenoberfläche des sich drehenden Filets (F) arbeiten.

2. Verfahren nach Anspruch 1, **dadurch gekennzeichnet, dass** die Zupfvorrichtung (18), welche mit einem zylindrischen, drehend arbeitenden Zylinder (18") versehen ist, in dessen Umfangsschicht die Zupfeinrichtungen (20) eingeformt sind, in dieselbe Richtung wie die Gefriertrommel (16) gesteuert gedreht wird, währenddessen ihre Umfangsoberfläche mit den darin eingeformten Zupflöchern/Kerben (20) dazu gebracht wird, die nach aussen zeigende Seitenoberfläche des Filets (F) während des Auszupfens der Stiftgräten zu überstreichen.

3. Verfahren nach Anspruch 1 oder 2, **dadurch gekennzeichnet, dass** nach der Entfernung der Stiftgräten die Filets (F) einem Häuten mittels eines Häutungsmessers (22), welches an sich bekannt ist, unterworfen werden, während sie in ihrer anfänglichen Position, angefroren auf der Umfangsoberfläche (16') der Gefriertrommel (16), gehalten werden.

4. Verfahren nach einem der mehreren der vorangegangenen Ansprüche, **dadurch gekennzeichnet, dass** die Filets (F) beim Zuführen in eine Maschine, welche mit einer drehend angetriebenen Gefriertrommel (16) und einer Stiftgräten-Zupfvorrichtung (18) versehen ist, in solch einer Weise bezüglich der Drehachse (0) der Gefriertrommel (16) ausgerichtet werden, dass sich die Längsrichtung der Filets (F) im wesentlichen in der Umfangsrichtung/Drehrichtung der Gefriertrommel (16) erstrecken wird.

5. Vorrichtung zum Entfemen von Stiftgräten aus Fischfilets (F), aus welchen bei einem vorangegangenen Fischbearbeitungsvorgang bereits Rückgrat und bevorzugt auch Rippen entfernt wurden, welche eine drehend angetriebene Gefriertrommel (16), auf deren Umfangsoberfläche (16') die Hautseite (S) oder die gehäutete Seite der Filets (F) anzufrieren ist, und auf welcher das Filet (F) somit fest gehalten wird und sich somit der Drehung der Gefriertrommel (16) in der/den folgenden Bearbeitungsvorgang/vorgängen anschliesst, umfasst, **dadurch gekennzeichnet, dass** die Vorrichtung eine Stiftgräten-Zupfvorrichtung (18) umfasst, welche in der Nähe des Umfanges (16') der Gefriertrommel und bevorzugt an dem Maschinenrahmen (R) befestigt ist.

6. Maschine nach Anspruch 5, **dadurch gekennzeichnet, dass** die Stiftgräten-Zupfvorrichtung (18) ein Halteteil (18') umfasst, welches feststehend, jedoch möglicherweise an dem Maschinenrahmen (R) verstellbar befestigt ist, und welcher einen drehbaren Träger für einen zylinderförmigen Arbeitskopf (18") ausbildet, in dessen Umfangsoberflächenschicht kerbenartige oder ausnehmungsähnliche Stiftgräten-Zupfeinrichtungen (20) eingeformt sind, welche sich in der Richtung der Drehung des Arbeitskopfes (18") erstrecken und bevorzugt mit einem relativ weiten Einführende für die Aufnahme des Endbereiches einer Stiftgräte versehen sind, wobei das weite Einführende sich in Richtung des anderen Endes verjüngt, und in welche die Stiftgräte aufgenommen wird und nachfolgend bei der gemeinsamen Drehung des zylinderförmigen Arbeitskopfes (18") und der Gefriertrommel (16) herausgezogen wird.

7. Maschine nach Anspruch 5 oder 6, **dadurch gekennzeichnet, dass** eine vertikale Ebene durch die Drehachse des drehend angetriebenen, zylinderförmigen Arbeitskopfes (18") der Stiftgräten-Zupfvorrichtung (18) einen spitzen Winkel mit einer vertikalen Ebene durch die Drehachse (0) der Gefriertrommel (16) ausbildet.

8. Maschine nach einem oder mehreren der Ansprüche 5 bis 7, **dadurch gekennzeichnet, dass** der drehend angetriebene, zylinderförmige Arbeitskopf (18") der Stiftgräten-Zupfvorrichtung (18) angeordnet ist, um in derselben Drehrichtung (0) wie die Gefriertrommel (16) angetrieben zu werden.

9. Maschine nach einem der Ansprüche 5 bis 8, **gekennzeichnet durch** eine Einlassrutsche (52) über dem oberen, im wesentlichen horizontalen Abschnitt (48') eines angetriebenen Endlosbandes (48), welches sich unmittelbar Unter den unteren Abschnitt der Gefriertrommel (16) erstreckt, wobei die Zuführanordnung (52, 48) vorgesehen ist, um Filets (F) zuzuführen, deren Längsrichtung im wesentlichen mit der Umfangsrichtung der Gefriertrommel (16) zusammenfällt.

10. Maschine nach einem der Ansprüche 5 bis 9, **dadurch gekennzeichnet, dass** die Maschine mit zumindest einem Sensor ausgerüstet ist, welcher angeordnet ist, um festzustellen, ob nach dem Auszupfen der Stiftgräten noch immer Gräten in dem Filet (F) vorhanden sind.

## Revendications

1. Procédé pour l'enlèvement d'arêtes (14) de filets de poisson (F), dont la colonne vertébrale et de préférence également les côtes (10, 12) ont déjà été enlevées dans une opération précédente de traitement du poisson, ce procédé comprenant les étapes de congélation d'un côté peau ou d'un côté chair dépouillée d'un filet (F) sur une surface circonférentielle (16') d'un tambour de congélation rotatif (16) de sorte que le filet (F) soit supporté de façon fixe sur le tambour, **caractérisé par** l'étape d'arrachage des arêtes (14) du filet (F), à partir d'une position immobile près de la surface circonférentielle (16') du tambour de congélation rotatif (16), au moyen d'un dispositif d'arrachage d'arêtes (18) comportant des moyens d'arrachage mobiles, par exemple rotatifs, sous la forme d'encoches (20) par exemple, qui travaillent en contact avec la surface latérale ou au voisinage immédiat de cette surface du filet en rotation (F) tournée vers l'extérieur.

2. Procédé selon la revendication 1, **caractérisé en ce que** le dispositif d'arrachage (18), qui comporte un tambour cylindrique entraîné en rotation (18") dans la couche circonférentielle duquel sont formés lesdits moyens d'arrachage (20), est entraîné en rotation forcée dans la même direction que le tambour de congélation (16) et, pendant cette rotation, sa surface circonférentielle comportant les trous / encoches d'arrachage (20) est amenée à balayer ladite surface latérale du filet (F) tournée vers l'extérieur pendant l'arrachage des arêtes.

3. Procédé selon la revendication 1 ou 2, **caractérisé en ce que**, après l'enlèvement des arêtes, les filets (F) sont dépouillés de la peau au moyen d'une lame d'enlèvement de la peau (22) connue en elle-même, tandis qu'ils sont maintenus dans leur position initiale, congelés sur la surface circonférentielle (16') du tambour de congélation (16).

4. Procédé selon une ou plusieurs des revendications précédentes, **caractérisé en ce que** les filets (F), lors de leur introduction dans une machine comportant un tambour de congélation entraîné en rotation (16) et un dispositif d'arrachage d'arêtes (18), sont orientés d'une manière telle, par rapport à l'axe de rotation (O) du tambour de congélation (16), que la direction longitudinale des filets (F) s'étend sensiblement dans la direction circonférentielle / direction de rotation du tambour de congélation (16).

5. Machine pour l'enlèvement des arêtes d'un filet de poisson (F), dont la colonne vertébrale et de préférence également les côtes ont été enlevées dans une opération précédente de traitement du poisson, comprenant un tambour de congélation entraîné en rotation (16) à la surface circonférentielle (16') duquel le côté peau (S) ou le côté dépouillé des filets (F) doit être congelé, et dans laquelle le filet (F) est ainsi tenu de façon fixe et suit donc la rotation du tambour de congélation (16) dans une ou des opérations de traitement subséquentes, **caractérisée en ce que** la machine comprend un dispositif d'arrachage d'arêtes (18) monté au voisinage de la circonférence (16') du tambour de congélation et de préférence sur le bâti de machine (R).

6. Machine selon la revendication 5, **caractérisée en ce que** le dispositif d'arrachage d'arêtes (18) comprend une partie de montage (18') qui est fixe mais qui peut être montée de façon réglable sur le bâti de machine (R), et qui constitue un support rotatif pour une tête de travail en forme de tambour (18") dans la couche de surface circonférentielle de laquelle sont formés des moyens d'arrachage d'arêtes en forme d'encoches ou de logements (20) qui sont allongés dans la direction de rotation de la tête de travail (18") et qui présentent de préférence une extrémité avant relativement large pour la réception de la partie d'extrémité d'une arête, l'extrémité avant large allant en diminuant vers l'extrémité arrière dans laquelle l'arête sera saisie puis extraite d'un coup sec du fait de la rotation commune de la tête de travail en forme de tambour (18") et du tambour de congélation (16).

7. Machine selon la revendication 5 ou 6, **caractérisée en ce qu'**un plan vertical passant par l'axe de rotation de la tête de travail en forme de tambour entraînée en rotation (18") du dispositif d'arrachage d'arêtes (18) forme un angle aigu avec un plan vertical passant par l'axe de rotation (O) du tambour de congélation (16).

8. Machine selon une ou plusieurs des revendications 5 à 7, **caractérisée en ce que** la tête de travail en forme de tambour entraînée en rotation (18") du dispositif d'arrachage d'arêtes (18) est agencée de manière à être entraînée dans la même direction de rotation (O) que le tambour de congélation (16).

9. Machine selon une quelconque des revendications 5 à 8, **caractérisée par** un conduit de chute d'entrée (52) placé au-dessus de la partie supérieure sensiblement horizontale (48') d'un convoyeur entraîné sans fin (48) s'étendant juste au-dessous de la partie inférieure du tambour de congélation (16), ce dispositif d'alimentation (52, 48) étant agencé pour amener les filets (F) de sorte que leur direction longitudinale coïncide essentiellement avec la direction circonférentielle du tambour de congélation (16).

10. Machine selon une quelconque des revendications 5 à 9, **caractérisée en ce que** la machine est équipée d'au moins un détecteur prévu pour détecter s'il reste encore des arêtes dans le filet (F) après l'arrachage des arêtes.
